(19) **Europäisches Patentamt**
**European Patent Office**
**Office européen des brevets**

(11) **EP 4 578 125 B1**

(12) **EUROPEAN PATENT SPECIFICATION**

(45) Date of publication and mention
of the grant of the patent:
**03.12.2025 Bulletin 2025/49**

(21) Application number: **22768708.4**

(22) Date of filing: **22.08.2022**

(51) International Patent Classification (IPC):
**H04L 1/00** (2006.01)

(52) Cooperative Patent Classification (CPC):
**H04L 1/0026; H04L 1/0035**

(86) International application number:
**PCT/EP2022/073339**

(87) International publication number:
**WO 2024/041723 (29.02.2024 Gazette 2024/09)**

(54) **HANDLING OF CQI REPORTS IN THE PRESENCE OF PRB BLOCKING**

HANDHABUNG VON CQI-BERICHTEN IN GEGENWART VON PRB-BLOCKIERUNG

GESTION DE RAPPORTS CQI EN PRÉSENCE D'UN BLOCAGE DE PRB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.07.2025 Bulletin 2025/27**

(73) Proprietor: **Telefonaktiebolaget LM Ericsson
(publ)
164 83 Stockholm (SE)**

(72) Inventors:
• **PEKSA, Michal
54-212 Wroclaw (PL)**
• **INGIELEWICZ, Michal
51-168 Wroclaw (PL)**
• **ZYCH, Piotr
51-180 Wroclaw (PL)**

(74) Representative: **Murgitroyd & Company
165-169 Scotland Street
Glasgow G5 8PL (GB)**

(56) References cited:
**WO-A1-2014/198311**

**Description**

**TECHNICAL FIELD**

Embodiments presented herein relate to a method, a network node, a computer program, and a computer program product for selecting transmission parameters for a user equipment.

**BACKGROUND**

In some wireless communication systems, two or more Radio Access Technologies (RATs) are operated with a partial spectrum overlap. In order to maximize the performance, each RAT should still operate within as much as possible of its designated bandwidth. However, due to carriers of other RATs that cannot be completely removed, it might not always be possible to for each RAT allocate carriers for its complete designated bandwidth. In this respect, the concept of Flexible Channel Bandwidth (FCB) has been introduced to allow for partial overlap of carriers used in Long Term Evolution (LTE) type of communication systems and in other types of RATs, such as New Radio (NR) type of communication systems.

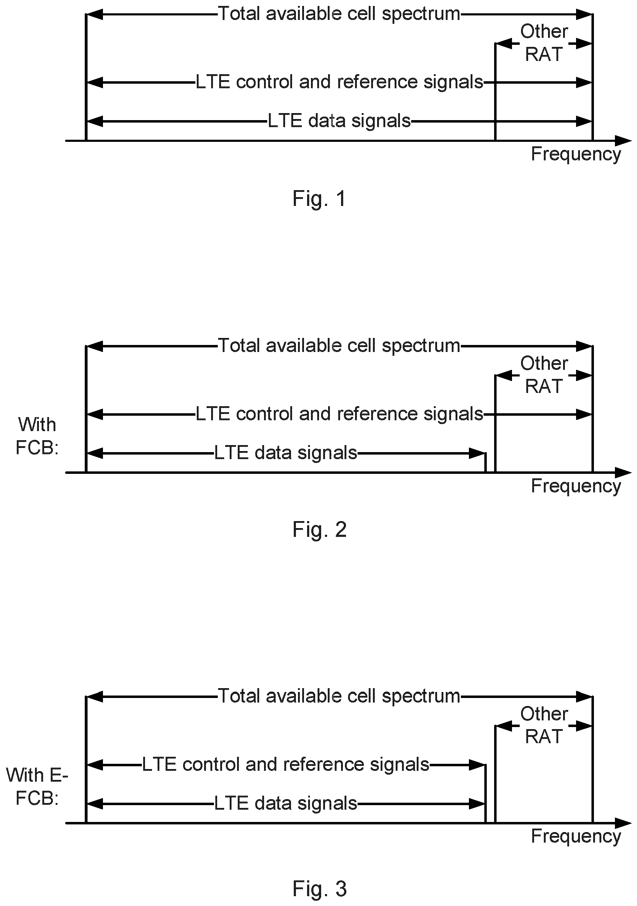

In **Fig. 1** is schematically illustrated an example of spectrum allocation for downlink (DL) channel resources in terms of LTE control signals and reference signals and LTE data signals as typically used in an LTE type of communication system when no FCB is active, together with the spectrum used by another RAT. Enabling FCB provides the network operator the ability to block certain physical resource blocks (PRBs). This is illustrated in Fig. 2. **Fig. 2** shows the same DL channel resources as in Fig. 1 but where FCB is active and a DL data channel (the physical downlink shared channel; PDSCH) has been muted, as illustrated by the spectrum allocation of the LTE data signals having been reduced compared to in Fig. 1. PRBs carrying control channels and reference signals in the DL will not be blocked.

In enhancements to FCB, hereinafter referred to as Enhanced Flexible Channel Bandwidth (E-FCB) operation, muting of any, or even all, channels and reference signals (when using both frequency-division duplexing; FDD and time-division duplexing; TDD) is allowed. This is illustrated in Fig. 3. **Fig. 3** shows the same DL channel resources as in Fig. 2 but where also control channels and reference signals have been muted, as illustrated by the spectrum allocation of the LTE control signals and reference signals having been reduced compared to in Fig. 1 and Fig. 2. In Fig. 3 this muting is caused by blocking of the PRBs at the upper the edge of the cell spectrum, although blocking of the PRBs might also occur at the lower edge of the cell spectrum, or at both edges, or at one or more other locations in the cell spectrum .

E-FCB including blocking complete parts of the spectrum, including PRBs used for transmission of control channels, will impact measurements made on the user equipment (UE) side. In this respect, the UE uses transmissions of Cell Specific Reference Signals (CRSs) and Channel State Information Reference Signals (CSI-RS) for evaluation of Channel Quality Indicator (CQI) channel metrics.

CQI reports represent feedback on channel quality and are reported by the UE back to the network side. The CQI reports could be sent on a control channel, such as the physical uplink control channel (PUCCH), or on a data channel, such as the physical uplink shared channel (PUSCH). CQI reports with high frequency of occurrence can be transmitted on the PUSCH for each subband when there is data to transmit. Wideband average CQI reports can be sent with low frequency of occurrence on the PUCCH when there is no data to transmit to the UE to enable the pathloss to be tracked.

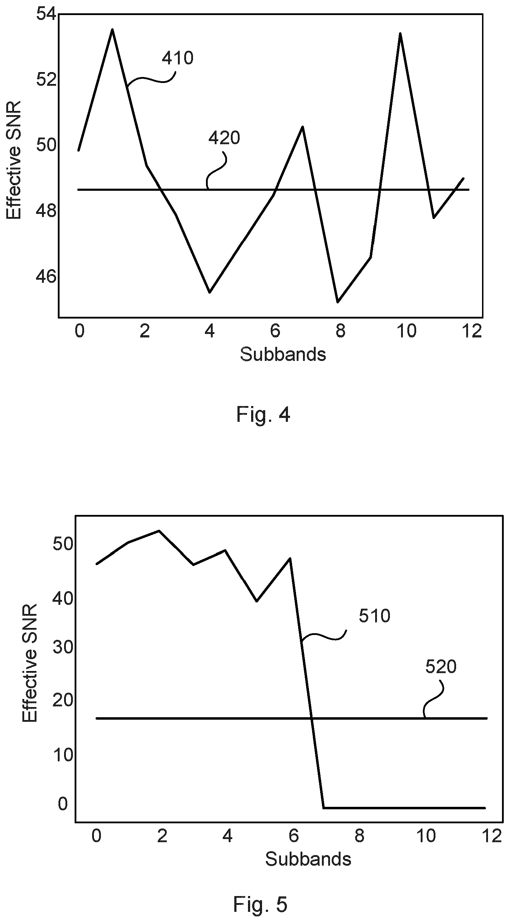

The UE will refer to measurements made on the complete spectrum of the cell when estimating the channel quality. This means that increasing the number of blocked PRBs might affect the measured signal to noise ratio (SNR) during the CQI estimation. In further detail, as shown in Fig. 4, and in Fig. 5, an increase in the number of punctured subcarriers (caused by the PRBs for a complete subband of the cell spectrum being blocked) drastically affects the measured SNR during WB-CQI estimation. In **Fig. 4** is shown at 410 the effective SNR for all 12 subbands as well as at 410 the wideband SNR without any puncturing of subcarriers. **Fig. 5,** on the other hand, shows at 510 the effective SNR for all 12 subbands as well as at 520 the wideband SNR with 528 punctured subcarriers. Effectively, this puncturing causes the reported value of the wideband CQI to shift down by up to 4 indices.

When E-FCB is applied, the CQI values reported by the UE might thus not accurately represent the properties of the truce propagation channel between the network node and the UE.

Hence, there is still a need for improved CQI reporting when PRBs are blocked that cause muting of DL control channels and reference signals.

The patent document WO 2014/198311 A1 discloses a method and system for classification of reported CQI values, corresponding to ABS and non-ABS subframes or muted/regular PRBs. The CQIs are corrected according to an Open Loop Link Adaptation (OLLA) procedure and used to select the proper modulation and coding scheme.

**SUMMARY**

An object of embodiments herein is to address the above issues.

According to a first aspect there is presented a method for selecting transmission parameters for a UE. The method is performed by a network node. The method comprises receiving a channel quality report from a UE served by a communication network where a portion of PRBs is blocked with muting of DL control channels and reference signals. The channel quality report comprises a CQI value. The method comprises obtaining a compensated SINR value for the UE from the CQI value as compensated due to downgrade caused by the DL control channels and reference signals being muted. The CQI value is compensated as a function of how large the blocked portion of PRBs is. The method comprises selecting the transmission parameters for the UE as a function of the compensated SINR value.

According to a second aspect there is presented a network node for selecting transmission parameters for a UE. The network node comprises processing circuitry. The processing circuitry is configured to cause the network node to receive a channel quality report from a UE served by a communication network where a portion of PRBs is blocked with muting of DL control channels and reference signals. The channel quality report comprises a CQI value. The processing circuitry is configured to cause the network node to obtain a compensated SINR value for the UE from the CQI value as compensated due to downgrade caused by the DL control channels and reference signals being muted. The CQI value is compensated as a function of how large the blocked portion of PRBs is. The processing circuitry is configured to cause the network node to select the transmission parameters for the UE as a function of the compensated SINR value.

According to a third aspect there is presented a computer program for selecting transmission parameters for a UE, the computer program comprising computer program code which, when run on a network node, causes the network node to perform a method according to the first aspect.

According to a fourth aspect there is presented a computer program product comprising a computer program according to the fourth aspect and a computer readable storage medium on which the computer program is stored. The computer readable storage medium could be a non-transitory computer readable storage medium.

Advantageously, these aspects address issues with CQI reports received from UE when PRBs are blocked that cause muting of DL control channels and reference signals.

Advantageously, these aspects improve the average cell throughput. Advantageously, these aspects are transparent to the UE and do not require any modifications to any communications standards utilized for the communication between the network node and the UE relating to CQI acquisition.

Advantageously, these aspects can be implemented in the network node at a comparative small cost in terms of computational complexity and storage requirements.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 schematically illustrates DL channel resources used in an LTE type of communication system according to an example;

Fig. 2 schematically illustrates DL channel resources used in an LTE type of communication system where FCBis active according to an example;

Fig. 3 schematically illustrates DL channel resources used in an LTE type of communication system where E-FCB is active according to an example;

Fig. 4 schematically illustrates effective SNR for subbands as well as wideband SNR without any subcarrier puncturing;

Fig. 5 schematically illustrates effective SNR for subbands as well as wideband SNR with subcarrier puncturing;

Fig. 6 is a schematic diagram illustrating a communication network according to embodiments;

Figs. 7 and 8 are flowcharts of methods according to embodiments;

Fig. 9 schematically illustrates simulation results according to embodiments;

Fig. 10 is a schematic diagram showing functional units of a network node according to an embodiment;

Fig. 11 is a schematic diagram showing functional modules of a network node according to an embodiment; and

Fig. 12 shows one example of a computer program product comprising computer readable storage medium according to an embodiment.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

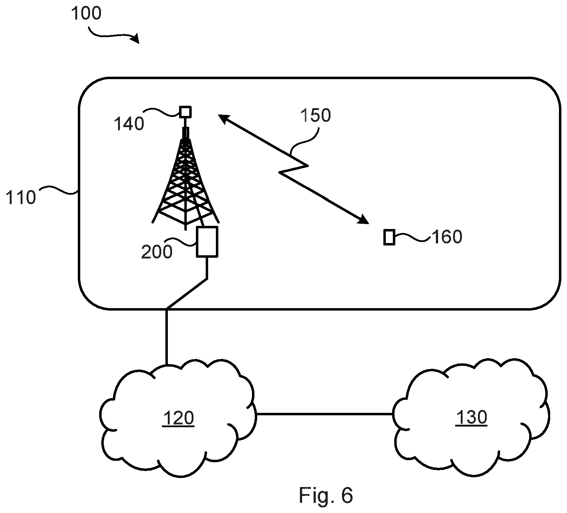

**Fig. 6** is a schematic diagram illustrating a communication network 100 where embodiments presented herein can be applied. The communication network 100 could be a multi-RAT telecommunications network where an LTE type of communication system is operated in combination with an NR type of communication system or the like. In some examples, the communication network 100 is in E-FCB operation.

The communication network 100 comprises a transmission and reception point 140 configured to provide network access to UE 160 in an (radio) access network 110 over a radio channel 150. The access network 110 is operatively connected to a core network 120. The core network 120 is in turn operatively connected to a service network 130, such as the Internet. The UE 160 is thereby, via the transmission and reception point 140, enabled to access services of, and exchange data with, the service network 130.

Operation of the transmission and reception point 140 is controlled by a network node 200. The network node 200 might be part of, collocated with, or integrated with the transmission and reception point 140. Examples of network nodes 200 are (radio) access network nodes, radio base stations, base transceiver stations, Node Bs (NBs), evolved Node Bs (eNBs), gNBs, access points, access nodes, and integrated access and backhaul (IAB) nodes. Examples of UE 160 are wireless devices, mobile stations, mobile phones, handsets, wireless local loop phones, smartphones, laptop computers, tablet computers, network equipped sensors, network equipped vehicles, and so-called Internet of Things devices.

As noted above, there is still a need for improved CQI reporting when PRBs are blocked that cause muting of DL control channels and reference signals The embodiments disclosed herein therefore relate to techniques for selecting transmission parameters for a UE 160. In order to obtain such techniques there is provided a network node 200, a method performed by the network node 200, a computer program product comprising code, for example in the form of a computer program, that when run on a network node 200, causes the network node 200 to perform the method.

In general terms, the signal to interference plus noise ratio (SINR) corresponding to the reported CQI value is compensated by an approximated value close to what the E-FCB operation would degrade the CQI value due to PRBs being blocked (causing CRS/CSI-RS to be muted).

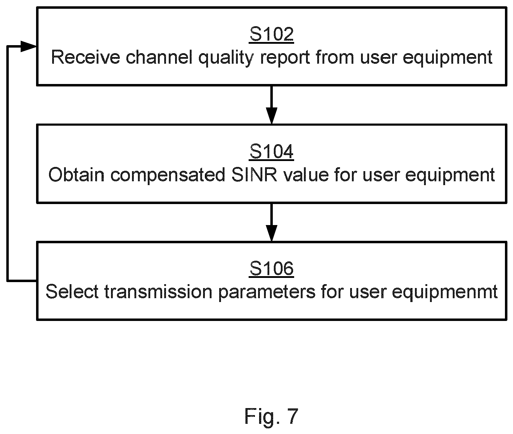

**Fig. 7** is a flowchart illustrating embodiments of methods for selecting transmission parameters for a UE 160. The methods are performed by the network node 200. The methods are advantageously provided as computer programs 1220.

S102: The network node 200 receives a channel quality report from a UE 160 served by a communication network 100. A portion of PRBs in the communication network 100 is blocked with muting of DL control channels and reference signals. The channel quality report comprises a CQI value.

S104: The network node 200 obtains a compensated SINR value for the UE 160 from the CQI value as compensated. The CQI value is compensated due to downgrade caused by the DL control channels and reference signals being muted. The CQI value is compensated as a function of how large the blocked portion of PRBs is.

S106: The network node 200 selects the transmission parameters for the UE 160 as a function of the compensated SINR value.

In that the transmission parameters are selected based on the compensated SINR value instead of the SINR value that would result directly from the reported CQI value, the transmission parameters can be selected to more accurately reflect the true channel propagation properties between the network node 200 and the UE 160. In turn, this enables the average cell throughput, as well as the throughput for the UE 160, to be increased.

Non-limiting examples of transmission parameters are modulation and coding scheme (MCS), code rate.

Embodiments relating to further details of selecting transmission parameters for a UE 160 as performed by the network node 200 will now be disclosed.

The embodiments apply to compensation of both wideband CQI and subband CQI. This can be achieved by modifying the CQI values received from the UE 160. In this respect, for wideband CQI the UE 140 sends reports of the measured SINR in form of a CQI index (0-15), whereas for each subband the UE 140 sends a difference value.

In some aspects, the SINR value is overshot by first selecting a one step higher CQI index and then compensating the SINR value based on the proportion of blocked PRBs. In particular, in some embodiments, the CQI value is a CQI index, and the CQI value initially is compensated by the CQI index being incremented by 1 before the CQI value is compensated as a function of how large the blocked portion of PRBs is. This might in some scenarios yield too high overshooting, resulting in too high increase of the BLER. This is since not all CQI index steps require the same overshooting. This overshooting might be avoided by utilizing a softer mapping between CQI values and SINR values. This will be disclosed next.

In some aspects, a mapping table for a CQI value (e.g., represented by a CQI index) to an intermediate SINR value is used. In particular, in some embodiments, the function according to which the CQI value is compensated partly is provided as a first mapping between CQI values and intermediate SINR values, with one intermediate SINR value per each CQI value. Table 1 provides an example of a mapping from CQI values (represented by CQI indices) to intermediate SINR values.

| CQI index | 0 | 1 | 2 | 3 | 4 | 5 | 6 | 7 |
|---|---|---|---|---|---|---|---|---|
| SINR | -8.40 | -6.27 | -4.34 | -2.28 | -0.31 | 1.61 | 3.56 | 5.58 |
| CQI index | 8 | 9 | 10 | 11 | 12 | 13 | 14 | 15 |
| SINR | 7.47 | 9.52 | 11.52 | 13.36 | 15.18 | 16.89 | 18.33 | 18.95 |
| Table 1: Mapping from CQI indices to intermediate SINR values | | | | | | | | |

In some aspects, the intermediate SINR value is mapped to a compensated SINR value as a function of blocked PRBs. In particular, in some embodiments, the function according to which the CQI value is compensated partly is provided as a second mapping between intermediate SINR values and compensated SINR values, with one compensated SINR value per each intermediate SINR. The second mapping is defined by how large the blocked portion of PRBs is. The intermediate SINR value might thus be modified according to the percentage of PRBs blocked to yield the compensated SINR value used by the network node 200 to select the transmission parameters for the UE 160.

In some aspects, the network operator selects how large share of the PRBs will be blocked according to the parameter dlFrequencyAllocationProportion. Hence, in some embodiments, how large the blocked portion of the PRBs is, is given by the parameter dlFrequencyAllocationProportion.

Then, the compensated SINR value, denoted $\text{SINR}_\text{C}$, for a given intermediate SINR value, denoted $\text{SINR}_\text{I}$, and value of dlFrequencyAllocationProportion is given by:

$$\text{SINR}_\text{C} = \text{SINR}_\text{I} + \text{sinrCorrectionProportion},$$

where all values are in decibel. Here,

$$\text{sinrCorrectionProportion} = \frac{1}{\text{dlFrequencyAllocationProportion}},$$

which can be calculated on cell setup based on the configured value of dlFrequencyAllocationProportion.

In some non-limiting examples, all dlFrequencyAllocationProportion configuration values listed in Table 2 are supported.

Table 2: dlFrequencyAllocationProportion and sinrCorrectionProportion configuration values for different bandwidths.

| Bandwidth | dlFrequencyAllocationProportion | sinrCorrectionProportion |
|---|---|---|
| 10 MHz | 90/84/78/72/66/60 % | 1.1111/1.1905/1.2821/1.3889/1.51 52/1.6667 |
| 15 MHz | 91/86/80/75/70 % | 1.1029/1.719/1.25/1.3393/1.4423 |
| 20 MHz | 96/92/88/84/80 % | 1.0417/1.087/1.1364/1.1905/1.25 |

The above mapping from CQI values to intermediate SINR values apply directly if the CQI value is represented by a CQI index, which is the case when the CQI value is a wideband CQI value.

However, the network node 200 might instead select the transmission parameters for the UE 160 based on a received subband CQI value.

In further detail, in some embodiments, the channel quality report further comprises a subband CQI value and the compensated SINR value for the UE 160 is obtained from the subband CQI value as compensated due to downgrade caused by the DL control channels and reference signals being muted. The subband CQI value is compensated as a function of how large the blocked portion of PRBs is.

The combination of subband CQI values and wideband CQI values might be regarded as bundled feedback with the subband CQI being described by a differential value, representing, in a 2-bit bitfield, its difference from the wideband CQI value. In this respect, subband CQI measurements are not directly impacted by the E-FCB, although in the worst case the drift between wideband CQI metric and subband CQI saturates the differential CQI values given in Table 3.

Table 3: SB-CQI differential CQI values and corresponding offset values

| Subband differential CQI value | Offset value |
| --- | --- |
| 0 | 0 |
| 1 | 1 |
| 2 | $\geq 2$ |
| 3 | $\leq -1$ |

As disclosed next, when the CQI value is a subband CQI value, some additional processing might be needed.

In some aspects, it is checked if a reported differential CQI value is saturated and should be compensated. In particular, in some embodiments, the subband CQI value is given as a differential CQI value, and it is verified, before obtaining the compensated SINR value, that the subband differential CQI value is saturated.

There could be different ways to determine whether the subband differential CQI value is saturated or not.

In some embodiments, the wideband CQI value is a CQI index, and the differential CQI value is saturated when being 2 index values higher than the CQI index, hence when

$$\text{receivedSbCqi} = \text{receivedWbCqi} + 2.$$

Subbands with such differential CQI values are then compensated for using the same procedure as disclosed above for wideband CQI values.

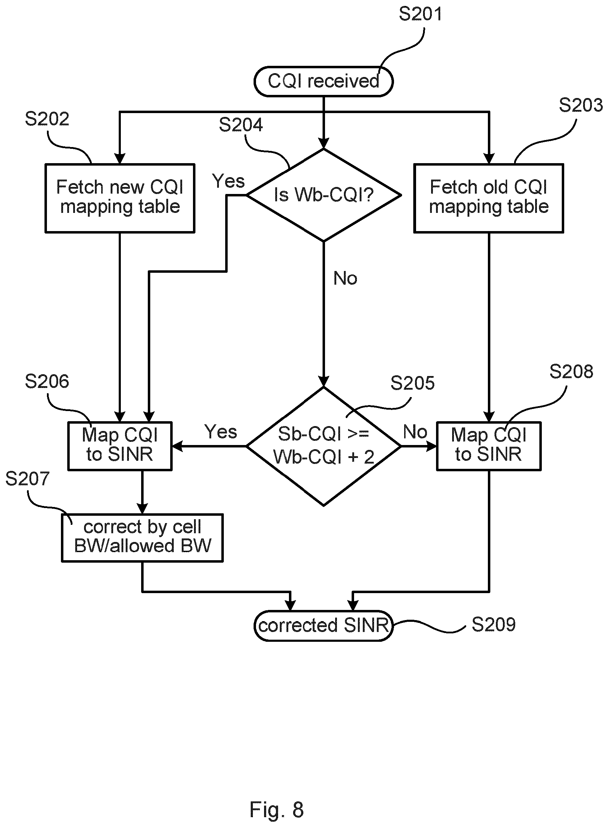

Reference is next made to the flowchart of **Fig. 8** which illustrates one embodiment of a method for selecting transmission parameters for a UE 160 as performed by the network node 200.

S201: A CQI report is received by the network node 200 from a UE 160. The CQI report is either a wideband CQI report or a subband CQI report. If the CQI report is a subband CQI report, this subband CQI report is assumed to have been preceded by a wideband CQI report.

S202, S203: CQI mapping tables are fetched.

S204: The type of the CQI report is checked. Step S205 is entered if the CQI report is a subband CQI report. S206 is entered if the CQI report is a wideband CQI report.

Step S205 and its dependent steps are looped over for all differential CQI values in the subband CQI report, starting with the first differential CQI value, then proceeding to the next, and so on.

S205: It is decided if the differential CQI value will be eligible for compensation by checking if the differential CQI value is equal to or higher than the previously received wideband CQI value as offset by 2 index values (or more), that is, if *receivedSbCqi* ≥ *receivedWbCqi* + 2. If yes, step S206 is entered. If no, step S208 is entered.

S206: Compensation is applied using Table 1 and Table 2.

S207: Correction is applied according to the value of dlFrequencyAllocationProportion.

S208: Existing mapping table from CQI values to SINR values is used; compensation is not applied.

S209: The SINR value (either with compensation as in S206 and S207 or without compensation as in S208) is used for selecting transmission parameters for the UE 160.

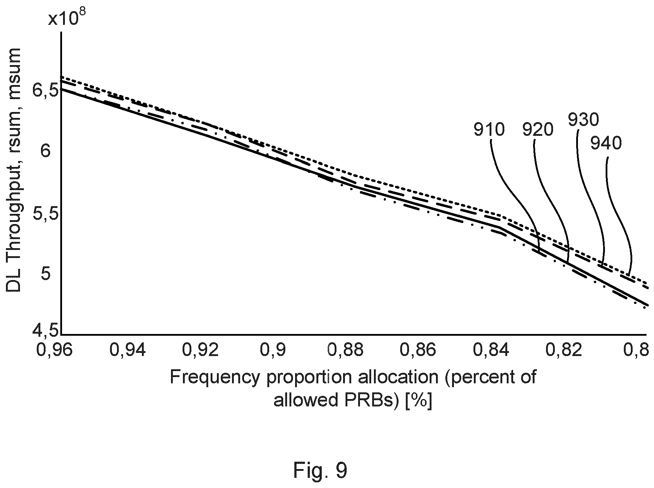

Reference is next made to **Fig. 9** which shows simulation results in terms of throughput gain as a function of the percentage of allocated PRBs for a 20MHz cell. Results are shown for four different cases; only compensation for wideband CQI values (920), only compensation for subband CQI values (930), compensation for both wideband and subband CQI values (940), and no compensation (910). It is clear from the results that compensation for CQI values improves the throughput, and that the larger gains can be observed when compensation is made for both wideband and subband CQI values.

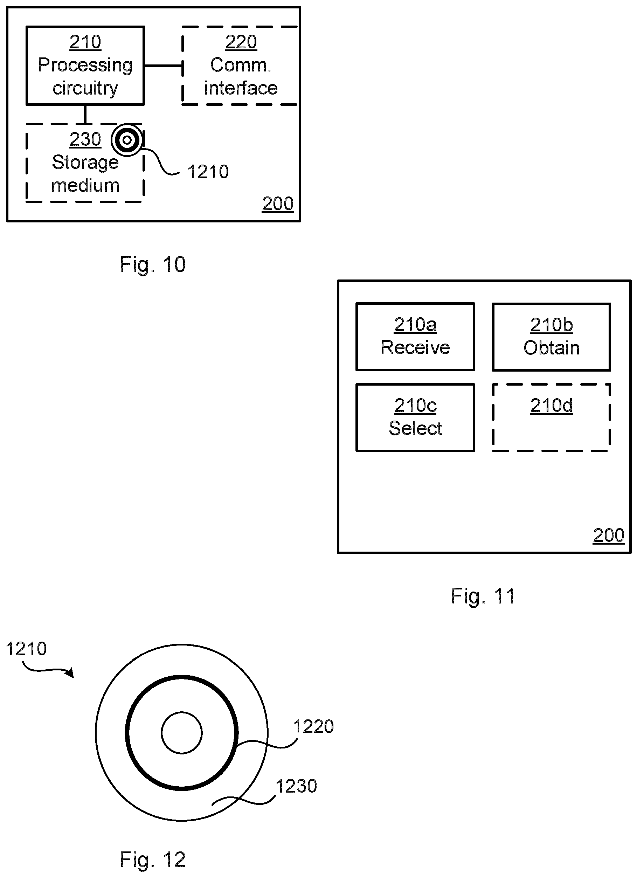

**Fig. 10** schematically illustrates, in terms of a number of functional units, the components of a network node 200 according to an embodiment. Processing circuitry 210 is provided using any combination of one or more of a suitable central processing unit (CPU), multiprocessor, microcontroller, digital signal processor (DSP), etc., capable of executing software instructions stored in a computer program product 1210 (as in Fig. 12), e.g. in the form of a storage medium 230. The processing circuitry 210 may further be provided as at least one application specific integrated circuit (ASIC), or field programmable gate array (FPGA).

Particularly, the processing circuitry 210 is configured to cause the network node 200 to perform a set of operations, or steps, as disclosed above. For example, the storage medium 230 may store the set of operations, and the processing circuitry 210 may be configured to retrieve the set of operations from the storage medium 230 to cause the network node 200 to perform the set of operations. The set of operations may be provided as a set of executable instructions.

Thus the processing circuitry 210 is thereby arranged to execute methods as herein disclosed. The storage medium 230 may also comprise persistent storage, which, for example, can be any single one or combination of magnetic memory, optical memory, solid state memory or even remotely mounted memory. The network node 200 may further comprise a communications interface 220 at least configured for communications with other entities, functions, nodes, and devices, as in the communication network 100 of Fig. 6. As such the communications interface 220 may comprise one or more transmitters and receivers, comprising analogue and digital components. The processing circuitry 210 controls the general operation of the network node 200 e.g. by sending data and control signals to the communications interface 220 and the storage medium 230, by receiving data and reports from the communications interface 220, and by retrieving data and instructions from the storage medium 230. Other components, as well as the related functionality, of the network node 200 are omitted in order not to obscure the concepts presented herein.

**Fig. 11** schematically illustrates, in terms of a number of functional modules, the components of a network node 200 according to an embodiment. The network node 200 of Fig. 11 comprises a number of functional modules; a receive module 210a configured to perform step S102, an obtain module 210b configured to perform step S104, and a select module 210c configured to perform step S106. The network node 200 of Fig. 11 may further comprise a number of optional functional modules, as represented by functional module 210d. In general terms, each functional module 210a:210d may in one embodiment be implemented only in hardware and in another embodiment with the help of software, i.e., the latter embodiment having computer program instructions stored on the storage medium 230 which when run on the processing circuitry makes the network node 200 perform the corresponding steps mentioned above in conjunction with Fig 11. It should also be mentioned that even though the modules correspond to parts of a computer program, they do not need to be separate modules therein, but the way in which they are implemented in software is dependent on the programming language used. Preferably, one or more or all functional modules 210a:210d may be implemented by the processing circuitry 210, possibly in cooperation with the communications interface 220 and/or the storage medium 230. The processing circuitry 210 may thus be configured to from the storage medium 230 fetch instructions as provided by a functional module 210a:210d and to execute these instructions, thereby performing any steps as disclosed herein.

The network node 200 may be provided as a standalone device or as a part of at least one further device. For example, the network node 200 may be provided in a node of the radio access network or in a node of the core network. Alternatively, functionality of the network node 200 may be distributed between at least two devices, or nodes. These at least two nodes, or devices, may either be part of the same network part (such as the radio access network or the core network) or may be spread between at least two such network parts. In general terms, instructions that are required to be performed in real time may be performed in a device, or node, operatively closer to the cell than instructions that are not required to be performed in real time.

Thus, a first portion of the instructions performed by the network node 200 may be executed in a first device, and a second portion of the of the instructions performed by the network node 200 may be executed in a second device; the herein disclosed embodiments are not limited to any particular number of devices on which the instructions performed by the network node 200 may be executed. Hence, the methods according to the herein disclosed embodiments are suitable to be performed by a network node 200 residing in a cloud computational environment. Therefore, although a single processing circuitry 210 is illustrated in Fig. 10 the processing circuitry 210 may be distributed among a plurality of devices, or nodes. The same applies to the functional modules 210a:210d of Fig. 11 and the computer program 1220 of Fig. 12.

**Fig. 12** shows one example of a computer program product 1210 comprising computer readable storage medium 1230. On this computer readable storage medium 1230, a computer program 1220 can be stored, which computer program 1220 can cause the processing circuitry 210 and thereto operatively coupled entities and devices, such as the communications interface 220 and the storage medium 230, to execute methods according to embodiments described herein. The computer program 1220 and/or computer program product 1210 may thus provide means for performing any steps as herein disclosed.

In the example of Fig. 12, the computer program product 1210 is illustrated as an optical disc, such as a CD (compact disc) or a DVD (digital versatile disc) or a Blu-Ray disc. The computer program product 1210 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1220 is here schematically shown as a track on the depicted optical disk, the computer program 1220 can be stored in any way which is suitable for the computer program product 1210.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

**Claims**

1. A method for selecting transmission parameters for a user equipment (160), the method being performed by a network node (200), the method comprising:
   receiving (S102) a channel quality report from a user equipment (160) served by a communication network (100) where a portion of physical resource blocks, PRBs, is blocked with muting of downlink, DL, control channels and reference signals, wherein the channel quality report comprises a channel quality indicator, CQI, value; **characterised by**:

   obtaining (S104) a compensated signal to interference plus noise ratio, SINR, value for the user equipment (160) from the CQI value as compensated due to downgrade caused by the DL control channels and reference signals being muted, wherein the CQI value is compensated as a function of how large the blocked portion of PRBs is; and
   selecting (S106) the transmission parameters for the user equipment (160) as a function of the compensated SINR value.

2. The method according to claim 1, wherein the communication network (100) is in Enhanced Flexible Channel Bandwidth, E-FCB, operation.

3. The method according to claim 1 or 2, wherein the CQI value is a CQI index, and wherein the CQI value initially is compensated by the CQI index being incremented by 1 before the CQI value is compensated as a function of how large the blocked portion of PRBs is.

4. The method according to any preceding claim, wherein the function according to which the CQI value is compensated partly is provided as a first mapping between CQI values and intermediate SINR values, with one intermediate SINR value per each CQI value.

5. The method according to claim 4, wherein the function according to which the CQI value is compensated partly is provided as a second mapping between intermediate SINR values and compensated SINR values, with one compensated SINR value per each intermediate SINR, and wherein the second mapping is defined by how large the blocked portion of PRBs is.

6. The method according to any preceding claim, wherein how large the blocked portion of PRBs is given by a parameter dlFrequencyAllocationProportion.

7. The method according to a combination of claims 5 and 6, wherein the compensated SINR value, denoted $SINR_C$, for a given intermediate SINR value, denoted $SINR_I$, and value of dlFrequencyAllocationProportion is given by:

$$SINR_C = SINR_I + \frac{1}{dlFrequencyAllocationProportion},$$

where all values are in decibel.

8. The method according to any preceding claim, wherein the CQI value is a wideband CQI value.

9. The method according to claim 8, wherein the channel quality report further comprises a subband CQI value, wherein the compensated SINR value for the user equipment (160) is obtained from the subband CQI value as compensated due to downgrade caused by the DL control channels and reference signals being muted, and wherein the subband CQI value is compensated as a function of how large the blocked portion of PRBs is.

10. The method according to claim 9, wherein the subband CQI value is given as a differential CQI value, and wherein it is verified, before obtaining the compensated SINR value, that the subband differential CQI value is saturated.

11. The method according to claim 10, wherein the wideband CQI value is a CQI index, and wherein the differential CQI value is saturated when being 2 index values higher than the CQI index.

12. A network node (200) for selecting transmission parameters for a user equipment (160), the network node (200) comprising processing circuitry (210), the processing circuitry being configured to cause the network node (200) to: receive a channel quality report from a user equipment (160) served by a communication network (100) where a portion of physical resource blocks, PRBs, is blocked with muting of downlink, DL, control channels and reference signals, wherein the channel quality report comprises a channel quality indicator, CQI, value; **characterised in that** the processing circuitry is further configured to:

obtain a compensated signal to interference plus noise ratio, SINR, value for the user equipment (160) from the CQI value as compensated due to downgrade caused by the DL control channels and reference signals being muted, wherein the CQI value is compensated as a function of how large the blocked portion of PRBs is; and select the transmission parameters for the user equipment (160) as a function of the compensated SINR value.

13. The network node (200) according to claim 12, wherein the processing circuitry further being configured to cause the network node (200) to perform the method of any of claims 2 to 11.

14. A computer program (1220) for selecting transmission parameters for a user equipment (160), the computer program comprising computer code which, when run on processing circuitry (210) of a network node (200), causes the network node (200) to: receive (S102) a channel quality report from a user equipment (160) served by a communication network (100) where a portion of physical resource blocks, PRBs, is blocked with muting of downlink, DL, control channels and reference signals, wherein the channel quality report comprises a channel quality indicator, CQI, value; **characterised in that** the computer code further causes the network node to:

obtain (S104) a compensated signal to interference plus noise ratio, SINR, value for the user equipment (160) from the CQI value as compensated due to downgrade caused by the DL control channels and reference signals being muted, wherein the CQI value is compensated as a function of how large the blocked portion of PRBs is; and select (S106) the transmission parameters for the user equipment (160) as a function of the compensated SINR value.

15. A computer program product (1210) comprising a computer program (1220) according to claim 14, and a computer readable storage medium (1230) on which the computer program is stored.

**Patentansprüche**

1. Ein Verfahren zum Auswählen von Übertragungsparametern für ein Benutzergerät (160), wobei das Verfahren durch einen Netzwerkknoten (200) durchgeführt wird, wobei das Verfahren Folgendes beinhaltet:

Empfangen (S102) eines Kanalqualitätsberichts von einem Benutzergerät (160), das durch ein Kommunikationsnetzwerk (100) bedient wird, bei dem ein Teil von physikalischen Ressourcenblöcken, PRBs, mit Stummschaltung von Downlink-Steuerkanälen, DL-Steuerkanälen, und Referenzsignalen blockiert ist, wobei der Kanalqualitätsbericht einen Kanalqualitätsindikatorwert, CQI-Wert (Channel-Quality-Indicator-Wert), beinhaltet;
**gekennzeichnet durch**:

Erhalten (S104) eines kompensierten Signal-zu-Interferenz-plus-Rausch-Verhältniswerts, SINR-Werts (Signal-to-Interference-plus-Noise-Ratio-Wert), für das Benutzergerät (160) aus dem CQI-Wert als kompensiert aufgrund von Herabstufung, die dadurch verursacht wird, dass die DL-Steuerkanäle und Referenzsignale stummgeschaltet sind, wobei der CQI-Wert als eine Funktion davon kompensiert wird, wie groß der blockierte Teil von PRBs ist; und

Auswählen (S106) der Übertragungsparameter für das Benutzergerät (160) als eine Funktion des kompensierten SINR-Werts.

2. Verfahren gemäß Anspruch 1, wobei das Kommunikationsnetzwerk (100) in verbessertem Betrieb mit flexibler Bandbreite, E-FCB-Betrieb (Enhanced-Flexible-Channel-Bandwidth-Betrieb), ist.

3. Verfahren gemäß Anspruch 1 oder 2, wobei der CQI-Wert ein CQI-Index ist und wobei der CQI-Wert anfänglich dadurch kompensiert wird, dass der CQI-Index um 1 inkrementiert wird, bevor der CQI-Wert als eine Funktion davon kompensiert wird, wie groß der blockierte Teil von PRBs ist.

4. Verfahren gemäß einem der vorhergehenden Ansprüche, wobei die Funktion, gemäß welcher der CQI-Wert kompensiert wird, teilweise als eine erste Zuordnung zwischen CQI-Werten und Zwischen-SINR-Werten bereitgestellt wird, mit einem Zwischen-SINR-Wert für jeden CQI-Wert.

5. Verfahren gemäß Anspruch 4, wobei die Funktion, gemäß welcher der CQI-Wert kompensiert wird, teilweise als eine zweite Zuordnung zwischen Zwischen-SINR-Werten und kompensierten SINR-Werten bereitgestellt wird, mit einem kompensierten SINR-Wert für jeden Zwischen-SINR, und wobei die zweite Zuordnung dadurch definiert ist, wie groß der blockierte Teil von PRBs ist.

6. Verfahren gemäß einem der vorhergehenden Ansprüche, wobei, wie groß der blockierte Teil von PRBs ist, durch einen Parameter dlFrequencyAllocationProportion gegeben ist.

7. Verfahren gemäß einer Kombination der Ansprüche 5 und 6, wobei der kompensierte SINR-Wert, bezeichnet als $SINR_C$, für einen gegebenen Zwischen-SINR-Wert, bezeichnet als $SINR_I$, und Wert von dlFrequencyAllocationProportion gegeben ist durch:

$$SINR_C = SINR_I + \frac{1}{\text{dlFrequencyAllocationProportion}},$$

wobei alle Werte in Dezibel sind.

8. Verfahren gemäß einem der vorhergehenden Ansprüche, wobei der CQI-Wert ein Breitband-CQI-Wert ist.

9. Verfahren gemäß Anspruch 8, wobei der Kanalqualitätsbericht ferner einen Teilband-CQI-Wert beinhaltet, wobei der kompensierte SINR-Wert für das Benutzergerät (160) aus dem Teilband-CQI-Wert als kompensiert aufgrund von Herabstufung erhalten wird, die dadurch verursacht wird, dass die DL-Steuerkanäle und Referenzsignale stummgeschaltet sind, und wobei der Teilband-CQI-Wert als eine Funktion davon kompensiert wird, wie groß der blockierte Teil von PRBs ist.

10. Verfahren gemäß Anspruch 9, wobei der Teilband-CQI-Wert als ein Differenz-CQI-Wert gegeben ist und wobei vor dem Erhalten des kompensierten SINR-Werts verifiziert wird, dass der Teilband-Differenz-CQI-Wert gesättigt ist.

11. Verfahren gemäß Anspruch 10, wobei der Breitband-CQI-Wert ein CQI-Index ist und wobei der Differenz-CQI-Wert gesättigt ist, wenn er 2 Indexwerte höher als der CQI-Index ist.

12. Ein Netzwerkknoten (200) zum Auswählen von Übertragungsparametern für ein Benutzergerät (160), wobei der Netzwerkknoten (200) eine Verarbeitungsschaltung (210) beinhaltet, wobei die Verarbeitungsschaltung konfiguriert ist, um den Netzwerkknoten (200) zu Folgendem zu veranlassen:

Empfangen eines Kanalqualitätsberichts von einem Benutzergerät (160), das durch ein Kommunikationsnetzwerk (100) bedient wird, bei dem ein Teil von physikalischen Ressourcenblöcken, PRBs, mit Stummschaltung von Downlink-Steuerkanälen, DL-Steuerkanälen, und Referenzsignalen blockiert ist, wobei der Kanalqualitätsbericht einen Kanalqualitätsindikatorwert, CQI-Wert, beinhaltet;
**dadurch gekennzeichnet, dass** die Verarbeitungsschaltung ferner zu Folgendem konfiguriert ist:

Erhalten eines kompensierten Signal-zu-Interferenz-plus-Rausch-Verhältniswerts, SINR-Werts, für das Benutzergerät (160) aus dem CQI-Wert als kompensiert aufgrund von Herabstufung, die dadurch verursacht wird, dass die DL-Steuerkanäle und Referenzsignale stummgeschaltet sind, wobei der CQI-Wert als eine Funktion davon kompensiert wird, wie groß der blockierte Teil von PRBs ist; und

Auswählen der Übertragungsparameter für das Benutzergerät (160) als eine Funktion des kompensierten SINR-Werts.

**13.** Netzwerkknoten (200) gemäß Anspruch 12, wobei die Verarbeitungsschaltung ferner konfiguriert ist, um den Netzwerkknoten (200) zu veranlassen, das Verfahren gemäß einem der Ansprüche 2 bis 11 durchzuführen.

**14.** Ein Computerprogramm (1220) zum Auswählen von Übertragungsparametern für ein Benutzergerät (160), wobei das Computerprogramm Computercode beinhaltet, der, wenn er auf einer Verarbeitungsschaltung (210) eines Netzwerkknotens (200) ausgeführt wird, den Netzwerkknoten (200) zu Folgendem veranlasst:

Empfangen (S102) eines Kanalqualitätsberichts von einem Benutzergerät (160), das durch ein Kommunikationsnetzwerk (100) bedient wird, bei dem ein Teil von physikalischen Ressourcenblöcken, PRBs, mit Stummschaltung von Downlink-Steuerkanälen, DL-Steuerkanälen, und Referenzsignalen blockiert ist, wobei der Kanalqualitätsbericht einen Kanalqualitätsindikatorwert, CQI-Wert, beinhaltet;
**dadurch gekennzeichnet, dass** der Computercode den Netzwerkknoten ferner zu Folgendem veranlasst:

Erhalten (S104) eines kompensierten Signal-zu-Interferenz-plus-Rausch-Verhältniswerts, SINR-Werts, für das Benutzergerät (160) aus dem CQI-Wert als kompensiert aufgrund von Herabstufung, die dadurch verursacht wird, dass die DL-Steuerkanäle und Referenzsignale stummgeschaltet sind, wobei der CQI-Wert als eine Funktion davon kompensiert wird, wie groß der blockierte Teil von PRBs ist; und
Auswählen (S106) der Übertragungsparameter für das Benutzergerät (160) als eine Funktion des kompensierten SINR-Werts.

**15.** Ein Computerprogrammprodukt (1210), das ein Computerprogramm (1220) gemäß Anspruch 14 und ein computerlesbares Speichermedium (1230), auf dem das Computerprogramm gespeichert ist, beinhaltet.

## Revendications

**1.** Un procédé de sélection de paramètres de transmission pour un équipement utilisateur (160), le procédé étant réalisé par un nœud de réseau (200), le procédé comprenant :

la réception (S102) d'un compte-rendu de qualité de canal à partir d'un équipement utilisateur (160) desservi par un réseau de communication (100) où une partie de blocs de ressources physiques, PRB, est bloquée avec une mise en sourdine de canaux de commande en liaison descendante, DL, et de signaux de référence, dans lequel le compte-rendu de qualité de canal comprend une valeur d'indicateur de qualité de canal, CQI *(Channel Quality Indicator) ;*
**caractérisé par** :

l'obtention (S104) d'une valeur compensée de rapport signal sur interférence plus bruit, SINR *(Signal to Interference plus Noise Ratio),* pour l'équipement utilisateur (160) à partir de la valeur CQI telle que compensée en raison d'une dégradation causée par la mise en sourdine des canaux de commande DL et des signaux de référence, dans lequel la valeur CQI est compensée en fonction de la taille de la partie bloquée de PRB ; et
la sélection (S106) des paramètres de transmission pour l'équipement utilisateur (160) en fonction de la valeur SINR compensée.

**2.** Le procédé selon la revendication 1, dans lequel le réseau de communication (100) est en fonctionnement à bande passante de canal flexible améliorée, E-FCB *(Enhanced Flexible Channel Bandwidth).*

**3.** Le procédé selon la revendication 1 ou 2, dans lequel la valeur CQI est un indice CQI, et dans lequel la valeur CQI est initialement compensée de sorte que l'indice CQI est incrémenté de 1 avant que la valeur CQI ne soit compensée en fonction de la taille de la partie bloquée de PRB.

**4.** Le procédé selon l'une quelconque des revendications précédentes, dans lequel la fonction selon laquelle la valeur CQI est partiellement compensée est fournie comme un premier mappage entre des valeurs CQI et des valeurs SINR intermédiaires, avec une valeur SINR intermédiaire pour chaque valeur CQI.

**5.** Le procédé selon la revendication 4, dans lequel la fonction selon laquelle la valeur CQI est partiellement compensée est fournie comme un second mappage entre des valeurs SINR intermédiaires et des valeurs SINR compensées, avec une valeur SINR compensée pour chaque SINR intermédiaire, et dans lequel le second mappage est défini par la taille de la partie bloquée de PRB.

**6.** Le procédé selon l'une quelconque des revendications précédentes, dans lequel la taille de la partie bloquée de PRB est donnée par un paramètre « dlFrequencyAllocationProportion ».

**7.** Le procédé selon une combinaison des revendications 5 et 6, dans lequel la valeur SINR compensée, notée $SINR_C$, pour une valeur SINR intermédiaire donnée, notée $SINR_I$, et une valeur de dlFrequencyAllocationProportion est donnée par :

$$SINR_C = SINR_I + \frac{1}{\text{dlFrequencyAllocationProportion}},$$

où toutes les valeurs sont en décibels.

**8.** Le procédé selon l'une quelconque des revendications précédentes, dans lequel la valeur CQI est une valeur CQI à large bande.

**9.** Le procédé selon la revendication 8, dans lequel le compte-rendu de qualité de canal comprend en outre une valeur CQI de sous-bande, dans lequel la valeur SINR compensée pour l'équipement utilisateur (160) est obtenue à partir de la valeur CQI de sous-bande telle que compensée en raison d'une dégradation causée par la mise en sourdine des canaux de commande DL et des signaux de référence, et dans lequel la valeur CQI de sous-bande est compensée en fonction de la taille de la partie bloquée de PRB.

**10.** Le procédé selon la revendication 9, dans lequel la valeur CQI de sous-bande est donnée comme une valeur CQI différentielle, et dans lequel il est vérifié, avant d'obtenir la valeur SINR compensée, que la valeur CQI différentielle de sous-bande est saturée.

**11.** Le procédé selon la revendication 10, dans lequel la valeur CQI à large bande est un indice CQI, et dans lequel la valeur CQI différentielle est saturée lorsqu'elle est 2 valeurs d'indice supérieures à l'indice CQI.

**12.** Un nœud de réseau (200) pour sélectionner des paramètres de transmission pour un équipement utilisateur (160), le nœud de réseau (200) comprenant une circuiterie de traitement (210), la circuiterie de traitement étant configurée pour amener le nœud de réseau (200) à :

recevoir un compte-rendu de qualité de canal à partir d'un équipement utilisateur (160) desservi par un réseau de communication (100) où une partie de blocs de ressources physiques, PRB, est bloquée avec une mise en sourdine de canaux de commande en liaison descendante, DL, et de signaux de référence, dans lequel le compte-rendu de qualité de canal comprend une valeur d'indicateur de qualité de canal, CQI ;
**caractérisé en ce que** la circuiterie de traitement est en outre configurée pour :

obtenir une valeur compensée de rapport signal sur interférence plus bruit, SINR, pour l'équipement utilisateur (160) à partir de la valeur CQI telle que compensée en raison d'une dégradation causée par la mise en sourdine des canaux de commande DL et des signaux de référence, dans lequel la valeur CQI est compensée en fonction de la taille de la partie bloquée de PRB ; et
sélectionner les paramètres de transmission pour l'équipement utilisateur (160) en fonction de la valeur SINR compensée.

**13.** Le nœud de réseau (200) selon la revendication 12, dans lequel la circuiterie de traitement est en outre configurée pour amener le nœud de réseau (200) à réaliser le procédé de l'une quelconque des revendications 2 à 11.

**14.** Un programme informatique (1220) pour sélectionner des paramètres de transmission pour un équipement utilisateur (160), le programme informatique comprenant un code informatique qui, lorsqu'il est exécuté sur une circuiterie de traitement (210) d'un nœud de réseau (200), amène le nœud de réseau (200) à :

recevoir (S102) un compte-rendu de qualité de canal à partir d'un équipement utilisateur (160) desservi par un réseau de communication (100) où une partie de blocs de ressources physiques, PRB, est bloquée avec une mise en sourdine de canaux de commande en liaison descendante, DL, et de signaux de référence, dans lequel le compte-rendu de qualité de canal comprend une valeur d'indicateur de qualité de canal, CQI ;

**caractérisé en ce que** le code informatique amène en outre le nœud de réseau à :

obtenir (S104) une valeur compensée de rapport signal sur interférence plus bruit, SINR, pour l'équipement utilisateur (160) à partir de la valeur CQI telle que compensée en raison d'une dégradation causée par la mise en sourdine des canaux de commande DL et des signaux de référence, dans lequel la valeur CQI est compensée en fonction de la taille de la partie bloquée de PRB ; et

sélectionner (S106) les paramètres de transmission pour l'équipement utilisateur (160) en fonction de la valeur SINR compensée.

15. Un produit de programme informatique (1210) comprenant un programme informatique (1220) selon la revendication 14, et un support de stockage lisible par ordinateur (1230) sur lequel le programme informatique est stocké.

Fig. 1

Fig. 2

Fig. 3

Fig. 4

Fig. 5

Fig. 6

## S102
Receive channel quality report from user equipment

## S104
Obtain compensated SINR value for user equipment

## S106
Select transmission parameters for user equipmenmt

Fig. 7

Fig. 8

Fig. 9

Fig. 10

Fig. 11

Fig. 12

**EP 4 578 125 B1**

**Patent documents cited in the description**

- WO 2014198311 A1